# EUROPÄISCHE PATENTSCHRIFT

(11) **EP 3 509 917 B1**
(45) Veröffentlichungstag und Bekanntmachung des Hinweises auf die Patenterteilung: **27.07.2022**
(21) Anmeldenummer: 17761827.9
(22) Anmeldetag: 16.08.2017
(51) Int. Cl.: B60T 7/20, B60T 17/22, G05D 1/00

(54) **SYSTEM ZUM FAHRERLOSEN OPERIEREN VON NUTZFAHRZEUGEN**
SYSTEM FOR DRIVERLESS OPERATION OF UTILITY VEHICLES
SYSTÈME PERMETTANT DE MAN UVRER SANS CONDUCTEUR DES VÉHICULES UTILITAIRES

(30) Priorität: 08.09.2016 DE 102016116861
(43) Veröffentlichungstag der Anmeldung: 17.07.2019
(73) Patentinhaber: KNORR-BREMSE Systeme für Nutzfahrzeuge GmbH, 80809 München (DE)
(72) Erfinder: NEMETH, Huba, 1116 Budapest (HU); FRANK, Peter, 1112 Budapest (HU); HORVATH, Csaba, 2051 Biatorbagy (HU)
(86) Internationale Anmeldenummer: PCT/EP2017/070743
(87) Internationale Veröffentlichungsnummer: WO 2018/046260

(56) Entgegenhaltungen:
- EP-A1- 2 998 177
- WO-A1-2014/148980
- ES-A2- 2 436 845
- US-A1- 2005 029 864

## Beschreibung

Die vorliegende Erfindung bezieht sich auf ein System und ein Verfahren zum fahrerlosen Operieren von Nutzfahrzeugen und insbesondere auf eine Architektur von Nutzfahrzeugen zum autonomen Betrieb in einem eingeschränkten Bereich.

Der autonome Betrieb von Transportfahrzeugen oder von anderen Nutzfahrzeugen findet zunehmend Interesse, auch wenn noch viele offene Probleme einen sicheren Betrieb häufig noch nicht ermöglichen. Die technische Komplexität des zugrundeliegenden Problems vereinfacht sich jedoch in Gebieten, wo Störeinflüsse geringgehalten werden können und die Fahrzeuggeschwindigkeiten begrenzt sind. Obwohl einige Anwendungen von fahrerlosen Operationen von Nutzfahrzeugen bereits möglich sind, besteht ein weiterer Bedarf nach automatisierten oder halbautomatisierten Operationen und insbesondere nach Umgebungen, wo solche Operationen durchgeführt werden können. Beispielsweise ist in EP 2 998 177 A1 eine Vorrichtung und ein Verfahren zum Steuern einer pneumatischen Feststellbremse, die eine duale Betriebsweise erlaubt (autonom/nichtautonom).

Außerdem sind bei dem Einsatz von Nutzfahrzeugen die Transportzeit und die Ausnutzung der Arbeitszeit des Fahrers signifikante Faktoren für die Effektivität einer Fahrzeugflotte. Ein Hauptteil des Transportes geschieht typischerweise auf öffentlichen Straßen mit standardisierten Regeln, die häufig keine hohen Anforderungen an den Fahrer darstellen. Probleme können jedoch auftreten, wenn das Nutzfahrzeug in speziellen Bereichen genutzt wird, wo die Umgebung einzigartig, der Raum begrenzt, aber trotzdem spezifische Manöver auszuführen sind, die häufig hohe Anforderungen an den Fahrer stellen. Außerdem verringert sich die Effektivität der Fahrzeugflotte oder die Anzahl von Unfällen nimmt zu, wenn Fahrer in speziellen, nicht-standardisierten Bereichen Manöver durchführen, die mit erhöhten Schwierigkeiten verbunden sind und daher mehr Zeit benötigen.

Um ein hohes Maß an Sicherheit bei dem autonomen Betrieb von Fahrzeugen sicherzustellen, ist es erforderlich, dass das Fahrzeug stets in einen sicheren Zustand gebracht werden kann. Das Fahrzeug soll sich in keinem Fall unkontrolliert bewegen.

Die bisher bekannten Lösungen sind unzureichend, um ein hohes Maß an Sicherheit bei der autonomen Fahrweise von Nutzfahrzeugen in einem eingeschränkten Bereich zu erreichen. Daher besteht ein Bedarf nach weiteren Systemen zum Operieren von Nutzfahrzeugen.

Zumindest ein Teil der obengenannten Probleme wird durch ein System zum Operieren eines Nutzfahrzeuges nach Anspruch 1, ein Verfahren nach Anspruch 6 und ein Computerprogrammprodukt nach Anspruch 7 gelöst. Die abhängigen Ansprüche definieren weitere vorteilhafte Ausführungsformen.

Die vorliegende Erfindung bezieht sich auf ein System zum fahrerlosen Operieren eines Nutzfahrzeuges in einem eingeschränkten Bereich. Das Nutzfahrzeug erlaubt einen autonomen Betriebsmodus und umfasst eine elektropneumatische Parkbremse, die ausgebildet ist, um bei Vorliegen eines gültigen autonomen Steuersignals die Parkbremse zu lösen und um eine automatische Notbremsung einzuleiten, wenn kein gültiges autonomes Steuersignal anliegt. Das System umfasst ein Steuermodul, das ausgebildet ist, um das gültige autonome Steuersignal an die elektropneumatische Parkbremse auszugeben und das Nutzfahrzeug fahrerlos zu steuern; und ein Übergabemodul, das ausgebildet ist, um eine Kontrolle über das Nutzfahrzeug von dem Fahrer an das Steuermodul zu übergeben.

Unter dem Begriff "operieren" sollen alle Tätigkeiten umfasst sein, die ansonsten der Fahrer ausführt und beispielsweise ein Fahren, Lenken, Bremsen und Beschleunigen umfassen. Der Begriff "fahrerlos" bedeutet insbesonderer, dass der Fahrer nicht im Fahrzeug anwesend ist.

Unter einem eingeschränkten Bereich soll im Rahmen der vorliegenden Erfindung alle Bereiche umfasst sein, in denen eine Regulierung derart vorliegt, dass beispielsweise eine Zugangskontrolle (z.B. für Personen) durchgeführt wird und eine Beschränkung hinsichtlich von Fahrzeugbewegungen vorliegt. Unter einem eingeschränkten Bereich sollen somit insbesondere Bereiche umfasst sein wie beispielsweise Verladehöfe, Be- und Entladestationen, Fähren, Flugzeuge, Schiffe, Eisenbahntransportmittel und anderes mehr. Optional können die Einfahrt und die Ausfahrt sich an einem gleichen Ort befinden bzw. nur verschieden Fahrbahnen einer Zufahrt darstellen.

Erfindungsgemäß umfasst das System weiter ein Überprüfungsmodul, das ausgebildet ist, um festzustellen, ob ein Fahrer in dem Nutzfahrzeug anwesend ist. Das Übergabemodul ist dann ausgebildet, um die Kontrolle über das Nutzfahrzeug nur dann an das Stermodul zu übergeben, wenn das Überprüfungsmodul festgestellt hat, dass kein Fahrer in dem Nutzfahrzeug anwesend ist. Dies kann beispielsweise eine Bedingung für den eingeschränkten Bereich sein, die zu erfüllen ist.

Die elektropneumatische Parkbremse kann folgende Komponenten aufweisen: ein bistabiles Ventil zum Aktivieren des autonomen Betriebsmodus und ein monostabiles Ventil, das im stabilen Zustand automatisch eine Notbremsung bei Abwesenheit des gültigen Steuersignals einleitet. In diesem Fall kann das Übergabemodul mit dem bistabilen Ventil gekoppelt sein, um bei der Übergabe der Kontrolle über das Nutzfahrzeug von dem Fahrer an das Steuermodul das bistabile Ventil in den autonomen Betriebsmodus zu schalten. Dieses Ventil kann beispielsweise von dem Fahrer betätigt werden. Außerdem kann das Steuermodul ausgebildet sein, um das gültige autonome Steuersignal an das monostabile Ventil zu übermitteln, um das monostabile Ventil in einem instabilen Zustand zu bringen, der die Notbremsung des Nutzfahrzeuges verhindert. Wenn aus irgendeinem Grund das autonome Stuersignal ausbleibt, wird so automatisch das monostabile Ventil in den stabilen Zustand wechseln und die Notbremsung einleiten.

Optional kann das Übergabemodul eine Schnittstelle für einen Fahrer des Nutzfahrzeuges bereitstellt, um die Übergabe auszulösen. Hierbei kann das bistabileVentil betätigt werden.

Das Nutzfahrzeug kann zumindest eine der folgenden Komponenten aufweisen: eine drehmomentgesteuerte Zusatzlenkeinrichtung, eine Kommunikationssteuereinrichtung, eine Positionsbestimmungseinrichtung, eine Umfeldsensoreinrichtung und ein elektronisches Trailerbremssystem. Optional kann dann das Steuermodul ausgebildet sein, um eine Funktionsbereitschaft der Komponenten zu prüfen und basierend auf der Überprüfung die Kontrolle über das Nutzfahrzeug zu übernehmen bzw. das autonome Steuersignal auszugeben.

Die vorliegende Erfindung bezieht sich auch auf ein Nutzfahrzeug mit einem System, wie es zuvor beschrieben wurde und welches die genannten Komponenten aufweisen kann.

Ein weiteres Ausführgungsbeispiel bezieht sich auf ein System, welches für ein kommerzielles Nutzfahrzeug und/oder eine Fahrzeugkombination geeignet ist, wobei das Fahrzeug eine elektropneumatische Betriebsbremse, die elektropneumatische Parkbremse, eine Drehmomentüberlagerungslenkung, eine Kommunikationssteuereinheit und eine autonome Fahrsteuereinheit (z.B. das Steuermodul) umfasst und insbesondere in dem eingeschränkten Bereich, wo die Einfahrt und auch die Ausfahrt beschränkt ist, autonom operiert wird. Ein Fahrer ist in dem Fahrzeug nicht präsent. Der sichere Zustand des Fahrzeuges wird durch die Notaktivierung der Parkbremse im Falle einer Fehlfunktion sichergestellt.

Wenn die Parkbremse einen bistabilen und einen weiteren monostabilen Operationsmodus erlaubt, kann das System die Parkbremse auf öffentlichen Straßen in einen stabilen Fahrmodus (z.B. mit deaktivierter Parkbremse) als Teil des bistabilen Operationsmodus betreiben. Die Notbremsung des Parkbremssystems kann wie bereits gesagt durch den monostabilen Operationsmodus sichergestellt werden.

In dem System kann weiterhin die Notbremsung des Parkbremssystems durch eine Aktivierung eines autonomen Steuersignals in dem normalen autonomen Fahrmodus in dem geschlossenen oder eingeschränkten Bereich vermieden werden bzw. unterdrückt werden. In dem System kann außerdem die Notbremsung des Parkbremssystems durch eine Deaktivierung des Steuersignals in dem monostabilen Operationsmodus sichergestellt werden.

Ausführungsbeispiele der vorliegenden Erfindung bieten den Vorteil, die Transportzeit und die Arbeitszeit des Fahrers effektiv zu nutzen und gleichzeitig die Wahrscheinlichkeit von Unfällen in einem eingeschränkten Bereich, in dem spezielle Handlungen an dem Fahrzeug ausgeführt werden, zu verringern. Zu den Handlungen gehören neben einem Bewegen des Nutzfahrzeuges beispielsweise ein Be- und Entladen, eine Wartung, eine Betankung, ein Säubern des Nutzfahrzeuges oder auch ein Transportieren des Nutzfahrzeuges durch externe Mittel (zum Beispiel auf Fähren, Zügen oder Flugzeugen).

Gemäß Ausführungsbeispielen ist die Anwesenheit des Fahrers in dem Nutzfahrzeug nicht notwendig. Mehr noch, der Fahrer braucht oder darf in dem Nutzfahrzeug nicht anwesend sein. Damit kann erreicht werden, dass möglichst wenig Personen in dem eingeschränkten Bereich sind und so ein hohes Maß an Sicherheit erreicht wird. Die Handlungen, die ansonsten durch einen Fahrer durchgeführt werden, werden durch ein autonomes Fahrzeugbewegungssystem ersetzt bzw. ausgeführt.

Die vorliegende Erfindung betrifft auch ein Verfahren zum fahrerlosen Operieren eines Nutzfahrzeuges in einem eingeschränkten Bereich. Das Nutzfahrzeug erlaubt einen autonomen Betriebsmodus und umfasst ein elektropneumatisches Parkbremssystem, das ausgebildet ist, um bei Vorliegen eines gültigen autonomen Steuersignals das Parkbremssystem zu lösen und um eine automatische Notbremsung einzuleiten, wenn kein gültiges autonomes Steuersignal anliegt. Das Verfahren umfasst die Schritte:
- Übergeben einer Kontrolle über das Nutzfahrzeug von einem Fahrer des Nutzfahrzeuges an ein Steuermodul;
- Ausgeben des gültigen autonomen Steuersignals an das elektropneumatische Parkbremssystem; und
- fahrerlos das Nutzfahrzeug bewegen.

Dieses Verfahren kann ebenfalls in Form von Anweisungen in Software oder auf einem Computerprogrammprodukt implementiert oder gespeichert sein, wobei gespeicherte Anweisungen in der Lage sind, die Schritte nach dem Verfahren auszuführen, wenn das Verfahren auf einem Prozessor (z.B. eine der Fahrzeugsteuereinheiten) läuft. Daher bezieht sich die vorliegende Erfindung ebenfalls auf Computerprogrammprodukt mit darauf gespeichertem Software-Code (Softwareanweisungen), der ausgebildet ist, um eines der zuvor beschriebenen Verfahren auszuführen, wenn der Software-Code durch eine Verarbeitungseinheit ausgeführt wird. Die Verarbeitungseinheit kann jede Form von Computer oder Steuereinheit sein und ebenfalls das beschriebene Steuermodul oder die Warnmodulsteuerung umfassen, die einen entsprechenden Mikroprozessor aufweisen, der einen Software-Code ausführen kann.

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränkt, sondern lediglich der Erklärung und dem Verständnis dienen.
- Fig. 1: zeigt ein System zum Operieren eines Nutzfahrzeuges in einem eingeschränkten Bereich.
- Fig. 2: zeigt eine beispielhafte Systemarchitektur eines Nutzfahrzeuges oder einer Fahrzeugkombination.
- Fig. 3: zeigt ein Flussdiagramm eines Verfahens zum fahrerlosen Bewegen eines Nutzfahrzeuges in einem eingeschränkten Bereich.

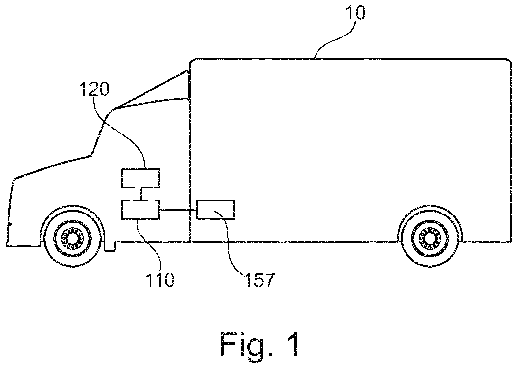

**Fig. 1** zeigt ein System gemäß einem Ausführungsbeispiel der vorliegenden Erfindung, das geeignet ist, ein Nutzfahrzeug 10 in einem eingeschränkten Bereich fahrerlos zu operieren. Das Nutzfahrzeug 10 erlaubt einen autonomen Betriebsmodus und umfasst eine elektropneumatische Parkbremse 157, die ausgebildet ist, um bei Vorliegen eines gültigen autonomen Steuersignals die Parkbremse 157 zu lösen und um eine automatische Notbremsung einzuleiten, wenn kein gültiges autonomes Steuersignal anliegt. Das System umfasst ein Steuermodul 110 und ein Übergabemodul 120. Das Steuermodul 110 ist ausgebildet, um das gültige autonome Steuersignal an die elektropneumatische Parkbremse 157 auszugeben und das Nutzfahrzeug 10 fahrerlos zu steuern. Das Übergabemodul 120 ist ausgebildet, um eine Kontrolle über das Nutzfahrzeug 10 von dem Fahrer an das Steuermodul 110 zu übergeben.

Um die fahrerlose Operation des Nutzfahrzeuges bei geringen Geschwindigkeiten sicherzustellen, umfasst das Nutzfahrzeug somit eine Architektur, die einen Sicherheitsmechanismus bei Ausfällen oder Betriebsstörungen automatisch in Kraft setzt. Gemäß Ausführungsbeispielen wird das Nutzfahrzeug bei jeder Fehlfunktion automatisch gestoppt. Dazu können entsprechende Detektionsmodule vorgesehen sein, die geeignet sind, um Fehlfunktionen festzustellen. Diese Detektionsmodule können bei der Detektion einer Fehlfunktion das Steuermodul 110 veranlassen, kein gültiges autonomes Steuersignal auszugeben. Ausführungsbeispiele erreichen dies durch eine elektropneumatische Parkbremse, die dann (d.h. bei Störungen) einen Notstopp ausführt und so einen sicheren Zustand gewährleistet.

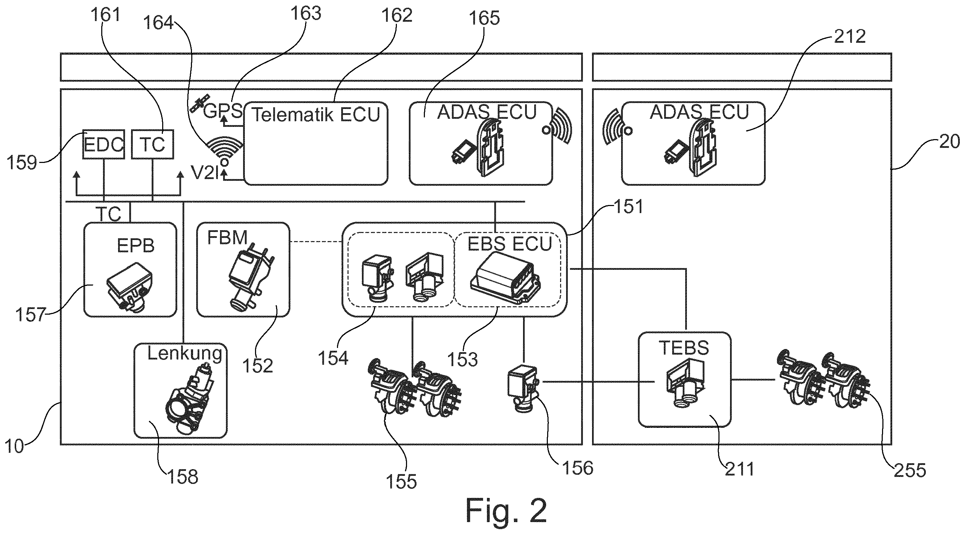

**Fig. 2** zeigt eine beispielhafte Systemarchitektur eines Nutzfahrzeuges 10, 20, das für einen geschlossenen oder eingeschränkten Bereich zur fahrerlosen Operation genutzt werden kann. Das Nutzfahrzeug umfasst eine Zugmaschine 10 und einen Trailer 20. Die Zugmaschine 10 ist mit einer elektropneumatischen Betriebsbremse 151 ausgerüstet, die durch ein Fußbremsmodul (FBM) 152 steuerbar ist. Die Bremsanweisungen von dem Fußbremsmodul (FBM) 152 werden durch eine zentrale Bremssteuereinheit (EBS ECU) 153 verarbeitet, die elektropneumatische Bremsmodule 154 ansteuert. Schließlich werden die Radbremsaktuatoren 155 mit entsprechenden Bremsdrücken versorgt, um die gewünschte Bremswirkung zu erzielen.

Außerdem umfasst die Zugmaschine 10 ein Trailersteuermodul 156, welches das Bremssystem des Trailers 20 ansteuert. Das System der Zugmaschine 10 umfasst weiter ein spezielles elektropneumatisches Parkbremssystem (EPB) 157. Dieses System kann beispielsweise als ein Modulator ausgebildet sein und erlaubt einen bistabilen Operationsmodus. Das elektropneumatische Parkbremssystem 157 umfasst außerdem einen monostabilen Operationsmodus, der aktiviert wird, wenn die Parkbremse nicht in gültiger Weise angesteuert wird (d.h. wenn kein gültiges autonomes Steuersignal anliegt), was somit zu einem Fahrzeugstopp führt. Dieser monostabile Operationsmodus kann beispielsweise für eine fahrerlose Fahrzeugoperation auf den geschlossenen oder eingeschränkten Bereichen wie beispielsweise Verladehöfen genutzt werden.

Um zu verhindern, dass das Fahrzeug während der normalen autonomen Operation gestoppt wird, ist das elektropneumatische Parkbremssystem 157 ausgebildet, eine Deaktivierung des monostabilen Operationsmodus zu verhindert, solange wie ein gültiges autonomes Steuersignal anliegt. Dies kann durch entsprechende Ventile geschehen, die den pneumatischen Druck an den Bremsaktuatoren regeln. Daher wird gemäß Ausführungsbeispielen ein Notstopp durch das elektropneumatische Parkbremssystem 157 nur dann ausgeführt, wenn kein gültiges autonomes Steuersignal anliegt (beispielsweise in Folge eines Fehlers, eines Stromausfalles oder irgendeiner anderen Störung). Dazu kann, wie bereits erwähnt, ein Detektionsmodel vorgesehen sein, das potentielle Fehler detektiert und basierend darauf, die Ausgabe eines gültigen autonomen Steuersignals verhindert.

Außerdem umfasst das System der Zugmaschine 10 ein Lenkmodul 158, welches ausgebildet ist, um eine Lenkbewegung in einem fahrerlosen Zustand durchzuführen. Dies kann beispielsweise durch ein Ausüben von unsymmetrischen Drehmomenten auf den gelenkten Rädern erfolgen. Das Fahrzeug umfasst weiterhin eine Motorsteuereinheit (EDC) 159 für eine beispielhafte Dieselmotorsteuerung oder eine ähnliche Steuereinheit für eine elektrische Antriebsmaschine. Außerdem umfasst die Zugmaschine 10 beispielhaft eine Steuereinheit 161 zur Überwachung des Übertragungssystems (TC, transmission control), die ausgebildet ist, um auch in der fahrerlosen Betriebsweise die Kupplung und/oder das Getriebe zu steuern.

Optional umfasst die Zugmaschine 10 eine elektronische Steuereinheit 162 für ein Telematiksystem. Dies ist optional mit Positionssensoren 163 koppelbar, um Positionsinformationen für das Fahrzeug (beispielsweise unter Nutzung von GPS-Informationen) bereitzustellen. Dazu kann beispielsweise ein Standard-GPS oder ein differenzielles GPS für hochgenaue Positionen genutzt werden. Diese Steuereinheit 162 kann ebenso eine Kommunikationseinheit 164 zwischen dem autonomen Fahrzeug und einem mobilen Gerät umfassen, welches der Fahrer oder ein Betreiber des eingeschränkten Bereiches optional besitzt, um mit dem Fahrzeug zu kommunizieren oder Daten (z.B. Weginformationen) zu übertragen.

Schließlich umfasst das System der Zugmaschine 10 eine automatisierte Fahrsteuereinheit (ADAS) 165, die Signale von einem oder mehreren Sensoren empfängt, die eine Umfelddetektion vornehmen können. Solche Sensoren können beispielsweise Radareinheiten, eine Kamera, ein LiDAR oder Ultraschallsensoren oder eine Kombination daraus umfassen. Diese Fahrsteuereinheit 165 verarbeitet und überwacht die vollständige fahrerlose Operation des Nutzfahrzeuges 10 bzw. der Kombination des Nutzfahrzeuges 10 und des Trailers 20 auf dem eingeschränkten Bereich. Darüber hinaus kann diese Steuereinheit 165 die unterschiedlichen Aktuatoren des Fahrzeuges 10 ansteuern oder überwachen. Hierzu gehören beispielsweise eine Lenkeinrichtung, die Betriebsbremse, die Parkbremse, die Maschinenschalteinheit. Das Steuermodul 110 kann beispielsweise Teil dieser Fahrsteuereinheit 165 sein. Das Steuermodul 110 kann beispielsweise über Software in der Fahrstuereinheit 165 (oder einer anderen Steuereinheit) implementiert sein, wobei die installierte Software die entsprechenden Funktionen des Steuermoduls 110 bereitstellt. Ebenso kann das Übergabemodul 120 über eine installierte Software in einer vorhandenen Steuereinheit implementiert sein.

Der Trailer 20 umfasst ein trailerelektronisches Bremssystem (TEBS) 211, welches durch das Trailersteuermodul 156 des Bremssystems der Zugmaschine 10 angesteuert wird und Bremsaktuatoren 255 des Trailers 20 betätigt. Außerdem umfasst der Trailer 20 eine ADAS-Steuereinheit 212, welche beispielsweise ausgebildet ist, um Signale von Umfeldsensoren zu sammeln, vorzuverarbeiten und diese zu der ADAS 163, der Zugmaschine 10 zu senden, um so dort die entsprechenden Schlussfolgerunden daraus zu ziehen.

Somit offenbart die Fig. 2 eine Architektur für eine Nutzfahrzeugskombination aus einer Zugmaschine 10 und einem Trailer 20, die für eine autonome Fahrweise bei geringer Geschwindigkeit auf einem geschlossenen oder eingeschränkten Bereich geeignet ist.

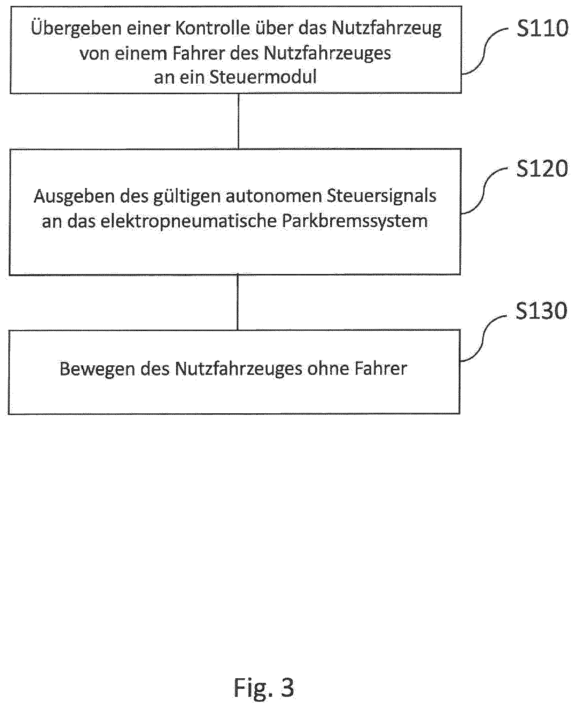

**Fig. 3** zeigt ein Flussdiagramm eines Verfahens zum fahrerlosen Bewegen (oder Operieren) eines Nutzfahrzeuges 10 in einem eingeschränkten Bereich. Das Nutzfahrzeug 10 erlaubt einen autonomen Betriebsmodus und umfasst ein elektropneumatisches Parkbremssystem 157, das ausgebildet ist, um bei Vorliegen eines gültigen autonomen Steuersignals das Parkbremssystem 157 zu lösen und um eine automatische Notbremsung einzuleiten, wenn kein gültiges autonomes Steuersignal anliegt. Das Verfahren umfasst die Schritte:
- Übergeben S110 einer Kontrolle über das Nutzfahrzeug 10 von einem Fahrer des Nutzfahrzeuges 10 an ein Steuermodul 110;
- Ausgeben S120 des gültigen autonomen Steuersignals an das elektropneumatische Parkbremssystem 157; und
- Bewegen S130 des Nutzfahrzeuges 10 ohne Fahrer.

Das Verfahren oder zumindest Teile davon kann/können ebenfalls Computerimplementiert sein, d.h. es kann durch Anweisungen umgesetzt sein, die auf einem Speichermedium gespeichert sind und in der Lage sind, die Schritte des Verfahrens auszuführen, wenn es auf einem Prozessor läuft. Die Anweisungen umfassen typischerweise eine oder mehrere Anweisungen, die auf unterschiedliche Art auf unterschiedlichen Medien in oder peripher zu einer Steuereinheit (mit einem Prozessor) gespeichert sein können, die, wenn sie gelesen und durch die Steuereinheit ausgeführt werden, die Steuereinheit dazu veranlassen, Funktionen, Funktionalitäten und Operationen auszuführen, die zum Ausführen eines Verfahrens gemäß der vorliegenden Erfindung notwendig sind.

### BEZUGSZEICHENLISTE

- 10: Zugmaschine
- 20: Trailer
- 110: Steuermodul
- 120: Übergabemodul
- 130: Überprüfungsmodul
- 151: elektropneumatischen Betriebsbremse (EPB)
- 152: Fußbremsmodul (FBM)
- 153: zentrale Bremssteuereinheit (EBS ECU)
- 154: elektropneumatische Bremsmodule
- 155, 255: Radbremsaktuatoren
- 156: Trailersteuermodul
- 157: elektropneumatisches Parkbremssystem (EPB)
- 158: Lenkmodul
- 159: Motorsteuereinheit (EDC)
- 161: Steuereinheit zur Überwachung des Übertragungssystems (TC)
- 162: elektronische Steuereinheit
- 163: Positionssensoren
- 164: Kommunikationseinheit
- 165: Fahrsteuereinheit (ADAS)
- 211: trailerelektronisches Bremssystem (TEBS)
- 212: ADAS-Steuereinheit (Trailer)

## Patentansprüche

1. System zum fahrerlosen Operieren eines Nutzfahrzeuges (10) in einem eingeschränkten Bereich, wobei das Nutzfahrzeug (10) einen autonomen Betriebsmodus erlaubt und ein elektropneumatisches Parkbremssystem (157) aufweist, das ausgebildet ist, um bei Vorliegen eines gültigen autonomen Steuersignals das Parkbremssystem (157) zu lösen und um eine automatische Notbremsung einzuleiten, wenn kein gültiges autonomes Steuersignal anliegt,
**gekennzeichnet durch:**
- ein Steuermodul (110), das ausgebildet ist, um das gültige autonome Steuersignal an das elektropneumatische Parkbremssystem (157) auszugeben und das Nutzfahrzeug (10) fahrerlos zu steuern und die Notbremsung des Parkbremssystems durch eine Deaktivierung des Steuersignals sicherzustellen;
- ein Übergabemodul (120), das ausgebildet ist, um eine Kontrolle über das Nutzfahrzeug (10) von dem Fahrer an das Steuermodul (110) zu übergeben; und
- ein Überprüfungsmodul (130), das ausgebildet ist, um festzustellen, ob ein Fahrer in dem Nutzfahrzeug (10) anwesend ist,
wobei das Übergabemodul (120) ausgebildet ist, um die Kontrolle über das Nutzfahrzeug (10) nur dann an das Stermodul (110) zu übergeben, wenn das Überprüfungsmodul (130) festgestellt hat, dass kein Fahrer in dem Nutzfahrzeug anwesend ist.

2. System nach Anspruch 1, wobei das elektropneumatische Parkbremssystem (157) folgende Komponenten aufweist: ein bistabiles Ventil zum Aktivieren des autonomen Betriebsmodus und ein monostabiles Ventil, das im stabilen Zustand automatisch eine Notbremsung bei Abwesenheit des gültigen Steuersignals einleitet, **dadurch gekennzeichnet, dass**
- das Übergabemodul (120) mit dem bistabilen Ventil gekoppelt ist, um bei der Übergabe der Kontrolle über das Nutzfahrzeug (10) von dem Fahrer an das Steuermodul (110) das bistabile Ventil in den autonomen Betriebsmodus zu schalten, und
- das Steuermodul (110) ausgebildet ist, um das gültige autonome Steuersignal an das monostabile Ventil zu übermitteln, um das monostabile Ventil in einem instabilen Zustand zu bringen, der die Notbremsung des Nutzfahrzeuges verhindert.

3. System nach einem der vorhergehenden Ansprüche,
**dadurch gekennzeichnet, dass**
das Übergabemodul (120) eine Schnittstelle für einen Fahrer des Nutzfahrzeuges (10) bereitstellt, um die Übergabe auszulösen.

4. System nach einem der vorhergehenden Ansprüche, wobei das Nutzfahrzeug (10) zumindest eine der folgenden Komponenten aufweist: eine drehmomentgesteuerte Zusatzlenkeinrichtung, eine Kommunikationssteuereinrichtung, eine Positionsbestimmungseinrichtung, eine Umfeldsensoreinrichtung, ein elektronisches Trailerbremssystem,
**dadurch gekennzeichnet, dass**
das Steuermodul (110) ausgebildet ist, um eine Funktionsbereitschaft der Komponenten zu prüfen und basierend auf der Überprüfung die Kontrolle über das Nutzfahrzeug zu übernehmen, um das Nutzfahrzeug (10) fahrerlos zu steuern.

5. Nutzfahrzeug mit einem elektropneumatischen Parkbremssystem (157), das ausgebildet ist, um bei Vorliegen eines gültigen autonomen Steuersignals das Parkbremssystem (157) zu lösen und um eine automatische Notbremsung einzuleiten, wenn kein gültiges autonomes Steuersignal anliegt,
**gekennzeichnet durch:**
ein System nach einem der Ansprüche 1 bis 4.

6. Verfahren zum fahrerlosen Operieren eines Nutzfahrzeuges (10) in einem eingeschränkten Bereich, wobei das Nutzfahrzeug (10) einen autonomen Betriebsmodus erlaubt und ein elektropneumatisches Parkbremssystem (157) aufweist, das ausgebildet ist, um bei Vorliegen eines gültigen autonomen Steuersignals das Parkbremssystem (157) zu lösen und um eine automatische Notbremsung einzuleiten, wenn kein gültiges autonomes Steuersignal anliegt,
**gekennzeichnet durch:**
- Übergeben (S110) einer Kontrolle über das Nutzfahrzeug (10) von einem Fahrer des Nutzfahrzeuges (10) an ein Steuermodul (110), wobei festgestellt wird, ob ein Fahrer in dem Nutzfahrzeug (10) anwesend ist und die Kontrolle über das Nutzfahrzeug (10) nur dann an das Stermodul (110) übergeben wird, wenn kein Fahrer in dem Nutzfahrzeug anwesend ist;
- Ausgeben (S120) des gültigen autonomen Steuersignals an das elektropneumatische Parkbremssystem (157);
- Bewegen (S130) des Nutzfahrzeuges (10) ohne Fahrer.

7. Computerprogrammprodukt mit darauf gespeicherter Software, die ausgebildet ist, um das Verfahren nach Anspruch 6 auszuführen, wenn die Software auf einer Datenverarbeitungseinheit ausgeführt wird.

## Claims

1. System for driverless operation of a utility vehicle (10) in a limited area, the utility vehicle (10) allowing an autonomous operating mode and comprising an electropneumatic parking brake system (157) which is designed to release the parking brake system (157) when a valid autonomous control signal is present and to initiate automatic emergency breaking when no valid autonomous control signal is applied,
**characterized by:**
- a control module (110) which is designed to output the valid autonomous control signal to the electropneumatic parking brake system (157) and to control the utility vehicle (10) in a driverless manner and to ensure the emergency braking of the parking brake system by deactivating the control signal;
- a transfer module (120) which is designed to transfer control of the utility vehicle (10) from the driver to the control module (110); and
- a checking module (130) which is designed to establish whether a driver is present in the utility vehicle (10),
wherein the transfer module (120) is designed to transfer the control of the utility vehicle (10) to the control module (110) only when the checking module (130) has established that no driver is present in the utility vehicle.

2. System according to Claim 1, the electropneumatic parking brake system (157) having the following components: a bistable valve for activating the autonomous operating mode, and a monostable valve which, in the stable state, automatically initiates emergency braking in the absence of the valid control signal, **characterized in that**
- the transfer module (120) is coupled to the bistable valve in order to switch the bistable valve to the autonomous operating mode when the control of the utility vehicle (10) is transferred from the driver to the control module (110), and
- the control module (110) is designed to transmit the valid autonomous control signal to the monostable valve in order to move the monostable valve into a non-stable state, which prevents the emergency braking of the utility vehicle.

3. System according to one of the preceding claims, **characterized in that**
the transfer module (120) provides an interface for a driver of the utility vehicle (10) in order to trigger the transfer.

4. System according to one of the preceding claims, the utility vehicle (10) having at least one of the following components: a torque-controlled additional steering device, a communication control device, a position determining device, an environment sensor device, an electronic trailer brake system,
**characterized in that**
the control module (110) is designed to check functional readiness of the components and, on the basis of the check, to take over the control of the utility vehicle in order to control the utility vehicle (10) in a driverless manner.

5. Utility vehicle having an electropneumatic parking brake system (157) which is designed to release the parking brake system (157) when a valid autonomous control signal is present and to initiate automatic emergency braking when no valid autonomous control signal is applied,
**characterized by:**
a system according to one of Claims 1 to 4.

6. Method for driverless operation of a utility vehicle (10) in a limited area, the utility vehicle (10) allowing an autonomous operating mode and comprising an electropneumatic parking brake system (157) which is designed to release the parking brake system (157) when a valid autonomous control signal is present and to initiate automatic emergency braking when no valid autonomous control signal is applied,
**characterized by:**
- transferring (S110) control of the utility vehicle (10) from a driver of the utility vehicle (10) to a control module (110), it being established whether a driver is present in the utility vehicle (10) and the control of the utility vehicle (10) being transferred to the control module (110) only when no driver is present in the utility vehicle;
- outputting (S120) the valid autonomous control signal to the electropneumatic parking brake system (157);
- moving (S130) the utility vehicle (10) without a driver.

7. Computer program product having software stored thereon which is designed to carry out the method according to Claim 6 when the software is executed on a data processing unit.

## Revendications

1. Système de manœuvre sans conducteur d'un véhicule (10) utilitaire dans un domaine limité, dans lequel le véhicule (10) utilitaire autorise un mode de fonctionnement autonome et a un système (157) électropneumatique de frein de stationnement, qui est constitué pour, en présence d'un signal autonome valable de commande, desserrer le système (157) de frein de stationnement et lancer un freinage automatique d'urgence, s'il n'y a pas de signal autonome valable de commande,
**caractérisé par** :
- un module (110) de commande, qui est constitué pour envoyer le signal autonome valable de commande au système (157) électropneumatique de frein de stationnement et pour commander sans conducteur le véhicule (10) utilitaire, et pour s'assurer du freinage d'urgence du système de freinage de stationnement par une désactivation du signal de commande ;
- un module (120) de transmission, qui est constitué pour transmettre un contrôle sur le véhicule (10) utilitaire du conducteur au module (110) de commande ; et
- un module (130) de vérification, qui est constitué pour constater si un conducteur est présent dans le véhicule (10) utilitaire,
dans lequel le module (120) de transmission est constitué pour transmettre le contrôle sur le véhicule (10) utilitaire au module (110) de commande, seulement si le module (130) de vérification a constaté qu'un conducteur n'est pas présent dans le véhicule utilitaire.

2. Système suivant la revendication 1, dans lequel le système (157) électropneumatique de frein de stationnement a les constituants suivants : une soupape bistable d'activation du mode de fonctionnement autonome et une soupape monostable qui, dans l'état stable, lance automatiquement un freinage d'urgence en l'absence du signal de commande valable,
**caractérisé en ce que**
- le module (120) de transmission est couplé à la soupape bistable pour, lors de la transmission du contrôle sur le véhicule (10) utilitaire du conducteur au module (110) de commande, mettre la soupape bistable dans le mode de fonctionnement autonome, et
- le module (110) de commande est constitué pour transmettre le signal autonome valable de commande à la soupape monostable, pour mettre la soupape monostable dans un état instable, qui empêche le freinage d'urgence du véhicule utilitaire.

3. Système suivant l'une des revendications précédentes, **caractérisé en ce que**
le module (120) de transmission procure une interface au conducteur du véhicule (10) utilitaire, pour déclencher la transmission.

4. Système suivant l'une des revendications précédentes, dans lequel le véhicule (10) utilitaire a au moins l'un des constituants suivants : un dispositif supplémentaire de direction commandé en couple, un dispositif de commande de communication, un dispositif de détermination de position, un dispositif capteur de l'environnement, un système électronique de frein de remorque, **caractérisé en ce que**
le module (110) de commande est constitué pour vérifier une aptitude à fonctionner des constituants et pour, sur la base de la vérification, prendre en charge le contrôle du véhicule utilitaire afin de commander sans conducteur le véhicule (10) utilitaire.

5. Véhicule utilitaire ayant un système (157) électropneumatique de frein de stationnement, qui est constitué pour, en présence d'un signal autonome valable de commande, desserrer le système (157) de frein de stationnement et lancer un freinage d'urgence automatique, s'il n'y a pas de signal autonome valable de commande,
**caractérisé par** :
un système suivant l'une des revendications 1 à 4.

6. Procédé de manœuvre sans conducteur d'un véhicule (10) utilitaire dans un domaine limité, dans lequel le véhicule (10) utilitaire autorise un mode de fonctionnement autonome et a un système (157) électropneumatique de frein de stationnement, qui est constitué pour, en présence d'un signal autonome valable de commande, desserrer le système (157) de frein de stationnement et lancer un freinage automatique d'urgence s'il n'y a pas de signal autonome valable de commande,
**caractérisé par** :
- la transmission (S110) d'un contrôle sur le véhicule (10) utilitaire d'un conducteur du véhicule (10) utilitaire à un module (110) de commande, dans lequel on constate si un conducteur est présent dans le véhicule (10) utilitaire et on ne transmet le contrôle sur le véhicule (10) utilitaire au module (110) de commande que si un conducteur n'est pas présent dans le véhicule utilitaire ;
- l'envoi (S120) du signal autonome valable de commande au système (157) électropneumatique de frein de stationnement ;
- la circulation (S130) du véhicule (10) utilitaire sans conducteur.

7. Produit de programme d'ordinateur ayant un logiciel qui est mis en mémoire et qui est constitué pour effectuer le procédé suivant la revendication 6, lorsque le logiciel est réalisé sur une unité de traitement de données.
